# EUROPEAN PATENT APPLICATION

(11) **EP 3 492 442 A1**
(43) Date of publication of application: **05.06.2019**
(21) Application number: 17833870.3
(22) Date of filing: 09.06.2017
(51) Int. Cl.: C04B 41/85, B32B 18/00, C04B 38/08

(54) **POROUS CERAMIC PARTICLES AND POROUS CERAMIC STRUCTURE**

(30) Priority: 29.07.2016 JP 2016149668
(71) Applicant: NGK Insulators, Ltd., Nagoya-shi, Aichi 467-8530 (JP)
(72) Inventor: ORIBE, Akinobu, Nagoya-shi Aichi 467-8530 (JP); TOMITA, Takahiro, Nagoya-shi Aichi 467-8530 (JP); KOBAYASHI, Hiroharu, Nagoya-shi Aichi 467-8530 (JP)
(74) Representative: Mewburn Ellis LLP
(86) International application number: PCT/JP2017/021461
(87) International publication number: WO 2018/020860

(57) **Abstract**

A porous ceramic particle (16) includes a porous portion (61) and a dense layer (62). The porous portion (61) has a plate-like shape and a pair of main surfaces (611) in parallel with each other. The dense layer (62) has porosity lower than that of the porous portion (61) and covers at least one main surface (611) among the pair of main surfaces (611) of the porous portion (61). A portion of a surface of the porous portion (61), which is other than the pair of main surfaces (611), is exposed from the dense layer (62). It is thereby possible to provide a porous ceramic particle (16) of low thermal conductivity and low heat capacity.

## Description

### Technical Field

The present invention relates to a porous ceramic particle and a porous ceramic structure.

### Background Art

On an inner wall of a combustion chamber of an engine, conventionally, provided is a thermal insulation film of low thermal conductivity. WO 2015/080065 (Document 1), for example, discloses a thermal insulation film in which porous materials are dispersed as a filler in a matrix. WO 2015/115667 (Document 2) discloses a technique to cover an entire surface of a center portion of a filler with an outer peripheral portion having porosity lower than that of the center portion in order to suppress a decrease in the thermal insulation effect due to infiltration of matrix components into pores of the filler.

WO 2013/125704 (Document 3) discloses a technique to form a thermal insulation layer on an inner wall of a combustion chamber of an engine and form a surface dense layer on a surface of the thermal insulation layer. In the thermal insulation layer, hollow particles or porous particles are dispersed as a filler in a matrix. The thermal insulation layer is formed by applying matrix materials including the filler onto the inner wall of the combustion chamber of the engine, drying, and then performing thermal processing. The surface dense layer is formed by applying materials including ceramics onto the surface of the thermal insulation layer, drying, and then performing thermal processing.

As shown in Documents 1 to 3, in the thermal insulation film in which the filler is dispersed in the matrix, it is not easy to uniformly disperse the filler. As a result, since there are more areas in which only matrices having thermal conductivity higher than that of the filler are gathered in the thermal insulation film, this causes a limitation on an increase in the thermal insulation performance of the thermal insulation film. Further, as shown in Document 3, in the case where the thermal insulation layer and the surface dense layer are formed in this order on the inner wall of the combustion chamber of the engine, the time required to form each layer increases and it is not easy to uniform the thickness of each layer. Furthermore, in Document 2, since the entire surface of the filler is covered with the outer peripheral portion having relatively high thermal conductivity, this causes a limitation on a decrease in the thermal conductivity.

### Summary of Invention

The present invention is intended for a porous ceramic particle, and it is an object of the present invention to provide a porous ceramic particle of low thermal conductivity and low heat capacity. The present invention is also intended for a porous ceramic structure.

The porous ceramic particle according to the present invention includes a plate-like porous portion having a pair of main surfaces in parallel with each other, and a dense layer having porosity lower than that of the porous portion and covering at least one main surface among the pair of main surfaces of the porous portion, and in the porous ceramic particle of the present invention, a portion of a surface of the porous portion, which is other than the pair of main surfaces, is exposed from the dense layer. It is thereby possible to provide a porous ceramic particle of low thermal conductivity and low heat capacity.

In one preferred embodiment of the present invention, the dense layer covers both the pair of main surfaces of the porous portion.

In another preferred embodiment of the present invention, the thickness of the dense layer is not larger than 1 % of that of the porous portion.

In still another preferred embodiment of the present invention, the thickness of the dense layer is not smaller than 0.1 times an average particle diameter of a skeleton particle of the porous portion and not larger than ten times thereof.

In yet another preferred embodiment of the present invention, the thickness of the dense layer is not smaller than 0.05 times an average pore diameter of the porous portion and not larger than five times thereof.

In a further preferred embodiment of the present invention, the thickness of the dense layer is not smaller than 10 nm and not larger than 1000 nm.

In a still further preferred embodiment of the present invention, the arithmetic average roughness of a surface of the dense layer is not smaller than 50 nm and not larger than 800 nm.

In a yet further preferred embodiment of the present invention, when a dense layer material which is a material forming the dense layer extends into the inside of the porous portion from the dense layer, the thickness of the dense layer material existing on the side of the porous portion from an interface between the dense layer and the porous portion is not larger than 10 % of the thickness of the dense layer.

The porous ceramic structure according to the present invention includes a sheet and a porous ceramic aggregate adhered on the sheet, and in the porous ceramic structure of the present invention, the porous ceramic aggregate includes a plurality of porous ceramic particles each of which has the same structure as that of a porous ceramic particle according to any one of the above-described aspects, and each porous ceramic particle among the plurality of porous ceramic particles is arranged adjacent to one of the other porous ceramic particles while respective side surfaces of the porous portions exposed from the dense layers are opposed to each other and one main surface of each porous ceramic particle is adhered on the sheet.

In one preferred embodiment of the present invention, the porous ceramic aggregate is a member placed on an object, and a planar shape of the porous ceramic aggregate viewed from an upper surface is the same as that of an area of the object where the porous ceramic aggregate is to be placed, which is viewed from an upper surface.

In another preferred embodiment of the present invention, there is at least one porous ceramic particle having a planar shape viewed from an upper surface, which is a polygonal shape surrounded by a plurality of straight lines, among the plurality of porous ceramic particles included in the porous ceramic aggregate.

In still another preferred embodiment of the present invention, a ratio of a porous ceramic particle having a planar shape viewed from an upper surface, which includes a curve, to the plurality of porous ceramic particles included in the porous ceramic aggregate is not higher than 50 %.

In yet another preferred embodiment of the present invention, the porous ceramic aggregate has a portion in which five or more porous ceramic particles are each arranged with one vertex opposed to one another.

In a further preferred embodiment of the present invention, a clearance between adjacent porous ceramic particles in the porous ceramic aggregate is not smaller than 0.1 µm and not larger than 10 µm.

In a still further preferred embodiment of the present invention, when respective side surfaces of adjacent porous ceramic particles are opposed to each other in parallel in the porous ceramic aggregate, a tilt angle of one side surface of the adjacent porous ceramic particles includes a portion having 45 degrees or smaller to a normal of the sheet.

In a yet further preferred embodiment of the present invention, there are different number densities of porous ceramic particles in the porous ceramic aggregate and a ratio of a maximum value of the number density to a minimum value thereof is larger than 1.2.

In a yet further preferred embodiment of the present invention, the plurality of porous ceramic particles have respective planar shapes of different sizes and a ratio of a maximum value of the size of the planar shape to a minimum value thereof is larger than 1.2.

These and other objects, features, aspects and advantages of the present invention will become more apparent from the following detailed description of the present invention when taken in conjunction with the accompanying drawings.

### Brief Description of Drawings

Fig. 1 is a perspective view showing a porous ceramic structure;
Fig. 2 is a sectional view showing a porous ceramic particle;
Fig. 3 is a side elevational view showing a manner in which the porous ceramic particles are placed on an object;
Fig. 4 is a side elevational view showing the manner in which the porous ceramic particles are placed on the object;
Fig. 5 is a plan view showing a plurality of porous ceramic particles;
Fig. 6 is another plan view showing the plurality of porous ceramic particles;
Fig. 7 is still another plan view showing the plurality of porous ceramic particles; and
Fig. 8 is a longitudinal section showing the porous ceramic structure.

### Description of Embodiments

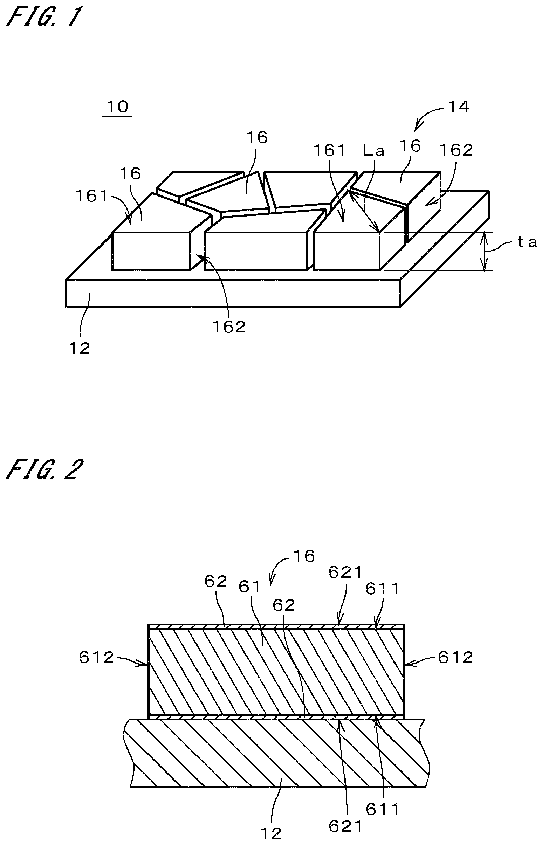

Fig. 1 is a perspective view showing a porous ceramic structure 10 in accordance with one preferred embodiment of the present invention. The porous ceramic structure 10 includes a sheet 12 and a porous ceramic aggregate 14. The porous ceramic aggregate 14 is adhered on the sheet 12. In other words, the porous ceramic aggregate 14 is fixed removably on the sheet 12.

The porous ceramic aggregate 14 is fixed on the sheet 12 by, for example, an adhesive force of the sheet 12. The sheet 12 is, for example, a resin sheet or a resin film having an adhesive force. The adhesive force (JIS Z0237) of the sheet 12 is preferably 1.0 N/10 mm or higher. The porous ceramic aggregate 14 can be thereby firmly fixed. The porous ceramic aggregate 14 may be temporarily firmly fixed on the sheet 12 with an adhesion interface. The porous ceramic aggregate 14 may be fixed on the sheet 12 through an adhesive agent or the like.

The adhesive force of the sheet 12 is reduced by applying heat, water, a solvent, electricity, light (including ultraviolet light), microwaves, an external force or the like to the sheet 12, by change over time, or the like. It is thereby possible to easily release the fixed state of the porous ceramic aggregate 14 on the sheet 12 and remove the porous ceramic aggregate 14 from the sheet 12. The adhesive force of the sheet 12 at the time when the porous ceramic aggregate 14 is removed is preferably 0.1 N/10 mm or lower. It is thereby possible to easily remove the porous ceramic aggregate 14 from the sheet 12.

The porous ceramic aggregate 14 includes a plurality of porous ceramic particles 16. Actually, the number of porous ceramic particles 16 included in the porous ceramic aggregate 14 is more than the number shown in Fig. 1. The number of porous ceramic particles 16 included in the porous ceramic aggregate 14 may be less than the number shown in Fig. 1. In the exemplary case shown in Fig. 1, respective shapes of the plurality of porous ceramic particles 16 in a plan view (i.e., planar shapes) are different from one another. The porous ceramic aggregate 14 may include two or more porous ceramic particles 16 having substantially the same planar shape.

The above-described word "porous" refers to a state which is not dense nor hollow. A porous structure is formed of, for example, a plurality of pores and a plurality of fine particles. The dense structure is a state in which a plurality of fine particles exist closer to one another than the porous structure. The porosity in the dense structure is lower than that in the porous structure. In the dense structure, the plurality of fine particles may be combined with almost no clearance. In other words, the dense structure may have almost no pore inside. A hollow structure is a state in which an outer shell portion has the dense structure and the inside of the outer shell portion is hollow.

Fig. 2 is a longitudinal section showing one porous ceramic particle 16. Fig. 2 also shows part of the sheet 12. Each of the plurality of porous ceramic particles 16 (see Fig. 1) included in the porous ceramic aggregate 14 has substantially the same structure as that shown in Fig. 2.

The porous ceramic particle 16 includes a porous portion 61 and a dense layer 62. The porous portion 61 is a plate-like portion having a pair of main surfaces 611 substantially in parallel with each other. The dense layer 62 substantially entirely covers at least one main surface 611 among the pair of main surfaces 611 of the porous portion 61. In the exemplary case shown in Fig. 2, the dense layer 62 substantially entirely covers both the pair of main surfaces 611 of the porous portion 61.

A portion of a surface of the porous portion 61, which is other than the pair of main surfaces 611, is exposed from the dense layer 62. Specifically, as shown in Fig. 2, when both the pair of main surfaces 611 of the porous portion 61 are covered with the dense layer 62, a substantially entire side surface 612 of the porous portion 61 is not covered with the dense layer 62 but is exposed from the dense layer 62. Further, when only one main surface 611 among the pair of main surfaces 611 of the porous portion 61 is covered with the dense layer 62, the substantially entire other main surface 611 and the substantially entire side surface 612 are not covered with the dense layer 62 but are exposed from the dense layer 62.

The thickness in a thickness direction of the porous portion 61 (hereinafter, also referred to simply as "thickness") is preferably not smaller than 50 µm and not larger than 500 µm, and further preferably not smaller than 55 µm and not larger than 400 µm. The thickness of the porous portion 61 is more preferably not smaller than 60 µm and not larger than 300 µm, and especially preferably not smaller than 70 µm and not larger than 200 µm. The above-described thickness direction is a direction perpendicular to the main surface 611 of the porous portion 61.

The porosity of the porous portion 61 is preferably not lower than 20 % and not higher than 99 %, and further preferably not lower than 30 % and not higher than 90 %. The porosity of the porous portion 61 is more preferably not lower than 40 % and not higher than 80 %, and especially preferably not lower than 50 % and not higher than 70 %. The pores of the porous portion 61 include an open pore which is open in the surface of the porous portion 61. The pores of the porous portion 61 may include a closed pore. The shape of the pore of the porous portion 61 is not particularly limited but may be any one of various shapes.

The average pore diameter of the porous portion 61 is preferably not larger than 500 nm, and further preferably not smaller than 10 nm and not larger than 500 nm. It is thereby possible to suitably inhibit occurrence of lattice vibration (phonon) which is a main cause of thermal conduction in the porous portion 61.

The porous portion 61 has a structure in which fine particles are three-dimensionally connected. The fine particles are particles forming a skeleton of the porous portion 61, and hereinafter are also referred to as "skeleton particles". The particle diameter of the skeleton particle of the porous portion 61 is preferably not smaller than 1 nm and not larger than 5 µm, and further preferably not smaller than 50 nm and not larger than 1 µm. It is thereby possible to suitably inhibit occurrence of lattice vibration (phonon) which is a main cause of thermal conduction in the porous portion 61 and to reduce the thermal conductivity of the porous ceramic particle 16. The skeleton particle of the porous portion 61 may be a particle formed of one crystal grain (i.e., monocrystalline particle) or may be a particle formed of a multitude of crystal grains (i.e., polycrystalline particle). The particle diameter of the skeleton particle is obtained by, for example, measuring the size of one fine particle included in a group of particles forming the skeleton of the porous portion 61 (for example, the diameter when the fine particle is spherical, or the maximum diameter when not spherical) from an image or the like obtained by observation using an electron microscope.

The thermal conductivity of the porous portion 61 is preferably lower than 1.5 W/mK, and further preferably not higher than 0.7 W/mK The thermal conductivity of the porous portion 61 is more preferably not higher than 0.5 W/mK, and especially preferably not higher than 0.3 W/mK.

The heat capacity of the porous portion 61 is preferably not higher than 1200 kJ/m³K, and further preferably not higher than 1000 kJ/m³K. The heat capacity of the porous portion 61 is more preferably not higher than 800 kJ/m³K, and especially preferably not higher than 500 kJ/m³K.

It is preferable that the porous portion 61 should include a metal oxide as a constituent material, and further preferable that the porous portion 61 should be formed only of the metal oxide. The metal oxide has ion binding properties between the metal and oxygen are stronger than those of a nonoxide of metal (for example, a carbide or a nitride). For this reason, since the porous portion 61 includes a metal oxide, the thermal conductivity of the porous portion 61 becomes lower.

The oxide included in the porous portion 61 is preferably an oxide of one element or a composite oxide of two or more elements, which are selected out of a group consisting of Zr, Y, Al, Si, Ti, Nb, Sr, La, Hf, Ce, Gd, Sm, Mn, Yb, Er, and Ta. This makes it hard to cause thermal conduction due to the lattice vibration (phonon) in the porous portion 61.

As the specific material of the porous portion 61, used is a material obtained by adding SiO₂, TiO₂, La₂O₃, Gd₂O₃, Yb₂O₃, Er₂O₃, or the like to ZrO₂-Y₂O₃. More specifically, ZrO₂-HfO₂-Y₂O₃, ZrO₂-Y₂O₃-La₂O₃, ZrO₂-HfO₂-Y₂O₃-La₂O₃, HfO₂-Y₂O₃, CeO₂-Y₂O₃, Gd₂Zr₂O₇, Sm₂Zr₂O₇, LaMnAl₁₁O₁₉, YTa₃O₉, Y_{0.7}La_{0.3}Ta₃O₉, Y_{1.08}Ta_{2.76}Zr_{0.24}O₉, Y₂Ti₂O₇, LaTa₃O₉, Yb₂Si₂O₇, Y₂Si₂O₇, Ti₃O₅, or the like is used as the material of the porous portion 61.

The dense layer 62 has porosity lower than that of the porous portion 61. The dense layer 62 includes, for example, almost no pore. A surface 621 of the dense layer 62 (in other words, a main surface on the opposite side of the porous portion 61) is a smooth surface. The arithmetic average roughness (Ra) of the surface 621 of the dense layer 62 is preferably not smaller than 50 nm and not larger than 800 nm.

The dense layer 62 preferably includes an oxide containing one or more of Si, Al, Ti, Zr, Na, K, Mg, Ca, Sr, Zn, and Y as the constituent material, and further preferably includes an oxide of Si as a main component. It is thereby possible to easily smooth the surface 621 of the dense layer 62. Further, a dense layer material which is the constituent material of the dense layer 62 may have the same composition as that of the porous portion 61.

The thickness of the dense layer 62 is preferably not smaller than 10 nm and not larger than 1000 nm. The thickness of the dense layer 62 is preferably larger than 0 % of the thickness of the porous portion 61 and not larger than 1 % thereof. In Fig. 2, the thickness of the dense layer 62 is shown larger than actual one. The thickness of the dense layer 62 is preferably not smaller than 0.1 times the average particle diameter of the skeleton particle of the porous portion 61 and not larger than ten times thereof. The thickness of the dense layer 62 is preferably not smaller than 0.05 times an average pore diameter of the porous portion 61 and not larger than five times thereof.

The thickness of the dense layer 62 is a distance between the surface 621 of the dense layer 62 and the main surface 611 of the porous portion 61 in the thickness direction. The main surface 611 of the porous portion 61 is also an interface between the dense layer 62 and the porous portion 61. The method of determining the interface between the dense layer 62 and the porous portion 61 is as follows.

First, an image of longitudinal section of the porous ceramic particle 16 is acquired by using the electron microscope or the like. Subsequently, in the image of longitudinal section, a plurality of straight lines (hereinafter, referred to as "interface candidate lines") in parallel with the surface 621 of the dense layer 62 are set on the porous ceramic particle 16 at an interval of 10 nm. Next, the interface candidate line closest to the surface 621 of the dense layer 62 is specified, and on the specified interface candidate line, a total length Ldense of a line segment overlapping the dense layer 62, a total length Lgrain of a line segment overlapping the skeleton particle of the porous portion 61, and a total length Lpore of a line segment overlapping the pore are obtained. Then, obtained is a ratio of Lpore to the total of Ldense, Lgrain, and Lpore (in other words, Lpore/(Ldense + Lgrain + Lpore), and hereinafter, referred to as a "pore length ratio").

When the pore length ratio is smaller than a predetermined threshold value, the pore length ratio is obtained with the interface candidate line which is second closest to the surface 621 of the dense layer 62, next to the current specified interface candidate line, (i.e., the interface candidate line adjacent to the specified interface candidate line on the opposite side of the surface 621) as a new specified interface candidate line. Then, until the pore length ratio of the specified interface candidate line becomes not smaller than the above-described threshold value, the pore length ratio is obtained while the specified interface candidate line is sequentially changed. In this determination method, the position of the interface candidate line at which the pore length ratio first becomes the above-described threshold value or more is determined as a position of the interface between the dense layer 62 and the porous portion 61. In other words, among the interface candidate lines on which the pore length ratio is not smaller than the above-described threshold value, the position of the interface candidate line closest to the surface 621 of the dense layer 62 is determined as the position of the interface between the dense layer 62 and the porous portion 61. The threshold value is 0.3.

In the above-described method of determining the interface, when the pore length ratio of the interface candidate line closest to the surface 621 of the dense layer 62, among the interface candidate lines on which the pore length ratio is not smaller than the threshold value, is larger than the threshold value, between the interface candidate line and an interface candidate line adjacent to the interface candidate line on the side of the surface 621, a position at which the pore length ratio is equal to the threshold value may be obtained by interpolation and determined as a position of the interface between the dense layer 62 and the porous portion 61.

When the dense layer material which is a material forming the dense layer 62 extends into the inside of the porous portion 61 (i.e., inside the pore of the porous portion 61) from the dense layer 62 beyond the above-described interface, the thickness of the dense layer material existing on the side of the porous portion 61 from the interface between the dense layer 62 and the porous portion 61 is preferably larger than 0 % of the thickness of the dense layer 62 and not larger than 10 % thereof. Further, the thickness of the dense layer material existing on the side of the porous portion 61 from the interface between the dense layer 62 and the porous portion 61 is sometimes larger than 10 % of the thickness of the dense layer 62, and in this case, the thickness of the dense layer material is, for example, several µm.

The aspect ratio of the porous ceramic particle 16 shown in Fig. 1 is preferably not less than 3, further preferably not less than 5, and more preferably not less than 7. The aspect ratio of the porous ceramic particle 16 is a ratio (i.e., La/ta) of the maximum length La of one main surface 161 of the porous ceramic particle 16 to the thickness ta of the porous ceramic particle 16. The one main surface 161 is the widest plane among a plurality of planes forming the porous ceramic particle 16, and in the exemplary case shown in Fig. 2, the one main surface 161 is the surface 621 of the dense layer 62 on the upper side or the lower side of the porous portion 61. When the shape of the main surface 161 is square, rectangle, trapezoid, parallelogram, or polygon (for example, pentagon or hexagon), the maximum length La is the length of the longest diagonal line of the main surface 161. When the shape of the main surface 161 is circle, the maximum length La is the diameter of the main surface 161. When the shape of the main surface 161 is ellipse, the maximum length La is the longer diameter of the main surface 161.

The thickness ta of the porous ceramic particle 16 is preferably not smaller than 50 µm and not larger than 500 µm, and further preferably not smaller than 55 µm and not larger than 300 µm. The variation in the thickness ta of the porous ceramic particles 16 in the porous ceramic aggregate 14 is preferably not higher than 10 %. In other words, the difference between the maximum value and the minimum value of the thickness ta of the porous ceramic particle 16 is not higher than 10 % of the average value of the maximum value and the minimum value of the thickness ta. As described later, when a plurality of porous ceramic particles 16 are set on an object to form a thermal insulation film, it is thereby possible to increase uniformity of the thickness of the thermal insulation film. As a result, it is possible to increase thermal insulation performance of the thermal insulation film.

The thermal conductivity of the porous ceramic particle 16 is preferably lower than 1.5 W/mK, and further preferably not higher than 0.7 W/mK. The thermal conductivity of the porous ceramic particle 16 is more preferably not higher than 0.5 W/mK, and especially preferably not higher than 0.3 W/mK.

The heat capacity of the porous ceramic particle 16 is preferably not higher than 1200 kJ/m³K, and further preferably not higher than 1000 kJ/m³K. The heat capacity of the porous ceramic particle 16 is more preferably not higher than 800 kJ/m³K, and especially preferably not higher than 500 kJ/m³K.

In the porous ceramic structure 10, as shown in Fig. 1, each of the plurality of porous ceramic particles 16 is arranged adjacent to one of the other porous ceramic particles 16 while respective side surfaces 162 are opposed to each other. In other words, each porous ceramic particle 16 is arranged adjacent to one of the other porous ceramic particles 16 while respective side surfaces 612 of the porous portion 61 (see Fig. 2) exposed from the dense layer 62 (see Fig. 2) are opposed to each other. The surface 621 of the dense layer 62 (see Fig. 2) which is one main surface 161 of each porous ceramic particle 16 is adhered on the sheet 12.

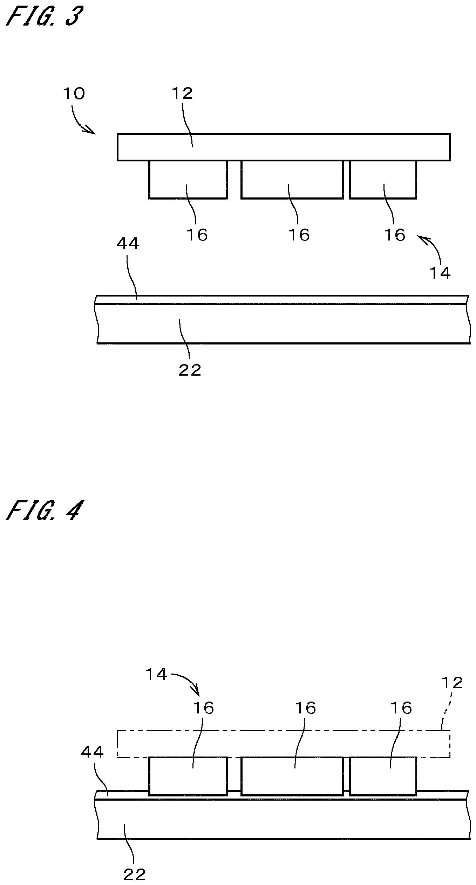

Next, by using the porous ceramic structure 10, a method of setting the plurality of porous ceramic particles 16 on the object will be described. The object is, for example, an inner wall of a combustion chamber of an engine. As shown in Fig. 3, first, an adhesive agent 44 is applied onto an object 22. Subsequently, the porous ceramic structure 10 is placed on the object 22 with the plurality of porous ceramic particles 16 of the porous ceramic aggregate 14 opposed to the adhesive agent 44. Then, as shown in Fig. 4, the sheet 12 is peeled off and removed from the plurality of porous ceramic particles 16, and the porous ceramic aggregate 14 is thereby placed (in other words, transferred) on the object 22, to form a thermal insulation film on the object 22. The peel-off of the sheet 12 is performed, for example, after the sheet 12 is heated.

Thus, by using the porous ceramic structure 10, it is possible to more easily place the plurality of porous ceramic particles 16 on the object 22 as compared with the case of individually placing the porous ceramic particles 16 on the object 22 one by one. Further, it is possible to easily control a clearance among the plurality of porous ceramic particles 16 (i.e., an interval between adjacent porous ceramic particles 16) with high accuracy. On the object 22, the porous ceramic aggregate 14 may be entirely covered with a resin material such as the adhesive agent or the like.

In the dense layer 62 of the porous ceramic particle 16 (see Fig. 2), a through hole penetrating the dense layer 62 in the thickness direction may be provided. Since the through hole is provided in the dense layer 62 opposed to the adhesive agent 44 on the object 22, when the porous ceramic particle 16 is placed on the adhesive agent 44, even if air remains between the dense layer 62 and the adhesive agent 44, the air moves to the porous portion 61 through the through hole and is removed from between the dense layer 62 and the adhesive agent 44. It is thereby possible to increase the fixing strength of the porous ceramic particle 16 onto the object 22.

In the porous ceramic particle 16, since the side surface 612 of the porous portion 61 is exposed from the dense layer 62 as described above and the open pore is included in the porous portion 61, the air between the dense layer 62 and the adhesive agent 44 can easily move toward the inside of the porous portion 61 through the above-described through hole. The maximum diameter of the through hole provided in the dense layer 62 is, for example, not smaller than 0.1 µm and not larger than 2 µm, and preferably not smaller than 0.1 µm and not larger than 0.5 µm. In the dense layer 62, for example, 1 to 20 through holes are provided per 250 µm². In the porous ceramic particle 16, even when there are through holes in the dense layer 62 provided on the main surface 611 of the porous portion 61 (for example, when there are 1 to 20 through holes per 250 µm²), it is understood that the main surface 611 of the porous portion 61 is substantially covered with the dense layer 62.

As described above, the porous ceramic particle 16 includes the porous portion 61 and the dense layer 62. The porous portion 61 has a plate-like shape and a pair of main surfaces 611 in parallel with each other. The dense layer 62 has porosity lower than that of the porous portion 61 and covers at least one main surface 611 among the pair of main surfaces 611 of the porous portion 61. A portion of the surface of the porous portion 61, which is other than the pair of main surfaces 611, is exposed from the dense layer 62.

It is thereby possible to provide the porous ceramic particle 16 of low thermal conductivity and low heat capacity. Specifically, with the porous portion 61, low thermal conductivity and low heat capacity of the porous ceramic particle 16 can be achieved. Further, with the dense layer 62, it is possible to prevent or suppress intrusion of extraneous matters to the inside of the porous portion 61 and to prevent or suppress reduction in the thermal insulation performance of the porous ceramic particle 16 due to the intrusion of extraneous matters.

Further, since the portion of the surface of the porous portion 61, which is other than the pair of main surfaces 611, is exposed from the dense layer 62, it is possible to reduce the area of the dense layer 62. As a result, it is possible to reduce the thermal conductivity and the heat capacity of the porous ceramic particle 16. Furthermore, since there is no dense layer 62 on the side surface 612 of the porous portion 61, it is possible to prevent heat transfer in the thickness direction through the dense layer 62. As a result, it is possible to increase the thermal insulation performance of the porous ceramic particle 16.

As described above, in the exemplary case shown in Fig. 2, the dense layer 62 covers both the pair of main surfaces 611 of the porous portion 61. It is thereby possible to prevent or suppress intrusion of extraneous matters such as the adhesive agent 44 or the like to the inside of the porous portion 61 from the main surface of the porous ceramic particle 16 on the side of the object 22. Further, it is also possible to prevent or suppress intrusion of extraneous matters to the inside of the porous portion 61 from the main surface of the porous portion 61 on the opposite side of the object 22. As a result, it is possible to prevent or further suppress reduction in the thermal insulation performance of the porous ceramic particle 16 due to the intrusion of extraneous matters.

In the porous ceramic particle 16, the thickness of the dense layer 62 is not more than 1 % of the thickness of the porous portion 61. It is thereby possible to reduce the volume fraction of the dense layer 62 to the whole porous ceramic particle 16 and to suppress an increase in the thermal conductivity and the heat capacity due to the dense layer 62.

The thickness of the dense layer 62 is not larger than 1000 nm. It is thereby possible to reduce the volume fraction of the dense layer 62 to the whole porous ceramic particle 16 and to suppress an increase in the thermal conductivity and the heat capacity due to the dense layer 62. Further, the thickness of the dense layer 62 is not smaller than 10 nm. It is thereby possible to facilitate formation of the dense layer 62.

As described above, the thickness of the dense layer 62 is not larger than ten times the average particle diameter of the skeleton particle of the porous portion 61. It is thereby possible to reduce the volume fraction of the dense layer 62 to the whole porous ceramic particle 16 and to suppress an increase in the thermal conductivity and the heat capacity due to the dense layer 62. Further, the thickness of the dense layer 62 is not smaller than 0.1 times the average particle diameter of the skeleton particle of the porous portion 61. It is thereby possible to facilitate formation of the dense layer 62.

The thickness of the dense layer 62 is not larger than five times the average pore diameter of the porous portion 61. It is thereby possible to reduce the volume fraction of the dense layer 62 to the whole porous ceramic particle 16 and to suppress an increase in the thermal conductivity and the heat capacity due to the dense layer 62. Further, the thickness of the dense layer 62 is not smaller than 0.05 times the average pore diameter of the porous portion 61. It is thereby possible to facilitate formation of the dense layer 62.

When the dense layer material which is a material forming the dense layer 62 extends into the inside of the porous portion 61 from the dense layer 62, the thickness of the dense layer material existing on the side of the porous portion 61 from the interface between the dense layer 62 and the porous portion 61 is not larger than 10 % of the thickness of the dense layer 62. Thus, by suppressing intrusion of the dense layer material to the inside of the porous portion 61, it is possible to prevent or suppress reduction in the thermal insulation performance of the porous ceramic particle 16.

The arithmetic average roughness of the surface 621 of the dense layer 62 is not larger than 800 nm. Thus, by increasing the smoothness of the surface 621 of the dense layer 62, it is possible to reduce the contact area between the dense layer 62 and high-temperature gas therearound. As a result, it is possible to suppress heat transfer from the high-temperature gas to the dense layer 62. Further, the arithmetic average roughness of the surface 621 of the dense layer 62 is not smaller than 50 nm. It is thereby possible to facilitate formation of the dense layer 62.

Next, an exemplary method of manufacturing the porous ceramic particle 16 will be described. First, by adding and mixing a pore-forming material, a binder, a plasticizer, a solvent, or the like to powder of the constituent material of the porous portion 61, a molding slurry is prepared. Subsequently, by performing a vacuum degassing process on the molding slurry, viscosity adjustment is performed, and then a compact (green sheet) is prepared by tape casting. For example, the molding slurry is placed on a polyester film, and the compact is prepared by using a doctor blade and the like so that the thickness after firing may become desired one. Next, the compact is removed from the polyester film and collected. Since the surface of the polyester film is mirror finish, a surface (hereinafter, referred to as a "removal surface") which is removed from the polyester film, among the surfaces of the compact, is also mirror finish. Then, by firing the collected compact, a plate-like sintered body is formed. As described above, since the removal surface of the compact is mirror finish, a main surface of the sintered body corresponding to the removal surface is also mirror finish. The sintered body is a member having a porous structure which is to become the porous portion 61 of the plurality of porous ceramic particles 16.

After the above-described sintered body is formed, a raw material liquid containing the constituent material of the dense layer 62 is applied onto a main surface of the sintered body. Application of the raw material liquid to the sintered body is performed by, for example, dipping, spray coating, spin coating, or roll coating. Subsequently, by performing firing and the like, crosslinking, firing, polymerization, and the like of the constituent material of the dense layer 62 proceed, to thereby form an original member in which a surface layer having a dense structure is provided on the main surface of the sintered body. The surface layer is a portion to become the dense layer 62. Further, the original member is a member to become the plurality of porous ceramic particles 16.

In formation of the original member, before the raw material liquid is applied to the sintered body, a liquid which promotes the crosslinking and the like of the raw material liquid may be applied on the main surface of the sintered body. It is thereby possible to prevent or suppress intrusion of the raw material liquid to the inside of the sintered body. When the raw material liquid contains a ceramic precursor (alkoxide, polysilazane, or the like of a metal such as Si, Al, or the like), for example, an additive (water or the like) which promotes conversion into ceramic is applied onto the main surface of the sintered body before the application of the raw material liquid.

Next, the original member is adhered onto the sheet 12 with the surface layer opposed to the surface of the sheet 12. The surface layer having the dense structure is firmly adhered onto the sheet 12. After that, by dividing the original member on the sheet 12, formed is the porous ceramic structure 10 in which the plurality of porous ceramic particles 16 (i.e., the porous ceramic aggregate 14) are adhered on the sheet 12. As described above, since the original member is firmly adhered on the sheet 12, it is possible to prevent or suppress removal of the porous ceramic particles 16 from the sheet 12 when the original member is divided. Division of the original member may be performed by any one of various methods. By cutting (or cracking) the original member with an edge tool being pressed thereagainst, for example, the plurality of porous ceramic particles 16 may be formed. Alternatively, by cutting the original member with a laser or the like, the plurality of porous ceramic particles 16 may be formed.

In the above-described case, though the surface layer which is to become the dense layer 62 is formed after the sintered body which is to become the porous portion 61 is formed, the sintered body and the surface layer may be formed substantially at the same time. For example, by firing after applying the raw material liquid onto the compact which is to become the sintered body, the original member may be formed. In this case, in the porous ceramic particle 16, it is possible to prevent (or suppress) intrusion of the dense layer material which is the constituent material of the dense layer 62 to the inside of the porous portion 61.

In the porous ceramic structure 10, the planar shape of the porous ceramic aggregate 14 viewed from an upper surface (i.e., the surface on the opposite side of the sheet 12) is preferably the same as that of an area of the above-described object 22 where the porous ceramic aggregate 14 is to be placed, which is viewed from an upper surface (i.e., a surface on which the porous ceramic aggregate 14 is to be placed). It is thereby possible to transfer the plurality of porous ceramic particles 16 onto the object 22 having any one of various shapes while preventing or suppressing a loss of material (a loss of the porous ceramic particles 16).

Further, the above-described planar shape of the porous ceramic aggregate 14 has only to be substantially the same as the above-described planar shape of the area (hereinafter, referred to as an "aggregate placement area") of the object 22 where the porous ceramic aggregate 14 is to be placed. Specifically, the planar shape of the porous ceramic aggregate 14 may be exactly the same as the planar shape of the aggregate placement area or may have similarity relation with the planar shape of the aggregate placement area. For example, the planar shape of the porous ceramic aggregate 14 may be similar to that of the aggregate placement area, being enlarged or reduced within a range not smaller than 1.1 times and not larger than 2.0 times.

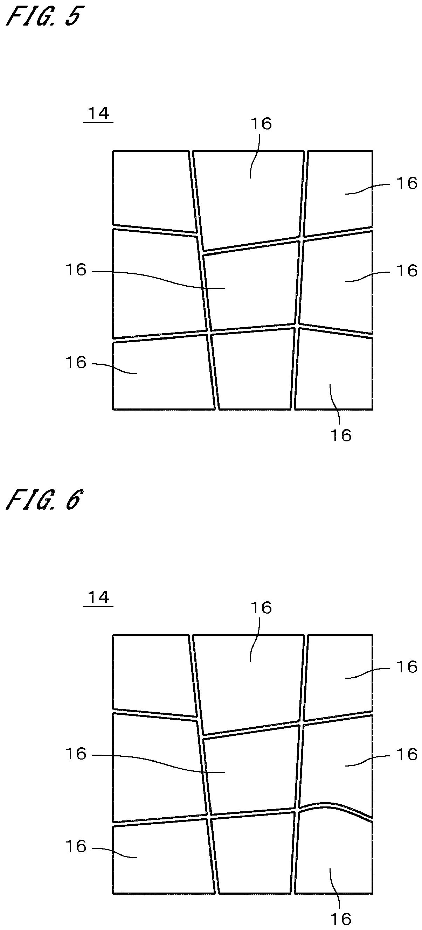

In the porous ceramic structure 10, as shown in Fig. 5, preferably, there is at least one porous ceramic particle 16 having a planar shape viewed from an upper surface, which is a polygonal shape surrounded by a plurality of straight lines, among the plurality of porous ceramic particles 16 included in the porous ceramic aggregate 14. In other words, it is preferable that the porous ceramic aggregate 14 should include one porous ceramic particle 16 or two or more porous ceramic particles 16 each having a planar shape which is a polygonal shape. Further, all the porous ceramic particles 16 included in the porous ceramic aggregate 14 may each have a planar shape which is a polygonal shape. When the porous ceramic aggregate 14 includes two or more porous ceramic particles 16 each having a planar shape which is a polygonal shape, the number of vertices of the upper surface of each porous ceramic particle 16 having the planar shape which is a polygonal shape may be equal to or may be different from the number of vertices of the upper surface of each of the other porous ceramic particles 16 having the planar shape which is a polygonal shape.

As shown in Fig. 6, for example, the porous ceramic aggregate 14 may include a porous ceramic particle 16 having a planar shape viewed from an upper surface, which includes a curve. Preferably, the ratio of the porous ceramic particle 16 having a planar shape viewed from an upper surface, which includes a curve, to the plurality of porous ceramic particles 16 included in the porous ceramic aggregate 14 is higher than 0 % and not higher than 50 %. In the porous ceramic aggregate 14, it is possible to suppress positional difference between the porous ceramic particles 16 adjacent to each other with the above-described curve interposed therebetween. When the porous ceramic aggregate 14 is transferred onto the object 22, it is thereby possible to place the plurality of porous ceramic particles 16 on the object 22 with high positional accuracy.

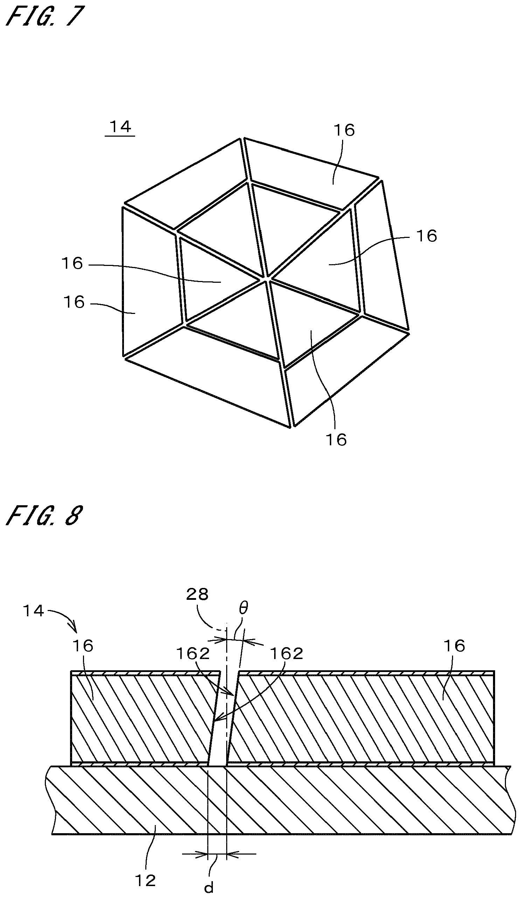

As shown in Fig. 7, the porous ceramic aggregate 14 may have, for example, a portion in which five or more porous ceramic particles 16 are arranged with respective one vertices opposed to one another. Even when there exists a curve (for example, a convex surface, a concave surface, or a concave-convex surface) locally on the surface of the object 22, the plurality of porous ceramic particles 16 can be easily arranged along the surface shape of the object 22.

As shown in Fig. 8, in the porous ceramic aggregate 14, the clearance d between adjacent porous ceramic particles 16 is preferably not smaller than 0.1 µm and not larger than 10 µm. It is thereby possible to easily and uniformly transfer the plurality of porous ceramic particles 16 onto the object 22. The above-described clearance d is an interval of the narrowest portion among the clearances between adjacent porous ceramic particles 16. The clearance d is obtained, for example, by measuring the interval between adjacent porous ceramic particles 16 in the porous ceramic aggregate 14 adhered on the sheet 12, with an optical microscope or the like.

In the porous ceramic aggregate 14, when respective side surfaces 162 of the adjacent porous ceramic particles 16 are opposed to each other in parallel, the tilt angle θ of one side surface 162 of the adjacent porous ceramic particles 16 includes a portion having 45 degrees or smaller to a normal 28 of the sheet 12. In other words, the tilt angle θ is preferably not smaller than 0 degrees and not larger than 45 degrees, and further preferably larger than 0 degrees and not larger than 45 degrees. If the tilt angle θ is larger than 45 degrees, there is a possibility that a portion in the vicinity of the side surface 162 of the porous ceramic particle 16 may become chipped. Then, as described above, since the tilt angle θ includes a portion having 45 degrees or smaller, when the porous ceramic particle 16 is transferred onto the object 22 or when the porous ceramic structure 10 is handled, or the like, it is possible to prevent or suppress chipping of the porous ceramic particle 16.

The tilt angle θ is obtained, for example, by measuring the interval between adjacent porous ceramic particles 16 in the porous ceramic aggregate 14 adhered on the sheet 12, with the optical microscope or the like. Further, when the clearance between adjacent porous ceramic particles 16 extends in the thickness direction while being bent, the tilt angle θ is an angle formed by a virtual straight line connecting an upper end and a lower end of the side surface 162 of the porous ceramic particle 16 in the longitudinal section and the normal 28.

In the porous ceramic structure 10, preferably, there are different number densities of porous ceramic particles 16 in the porous ceramic aggregate 14. The ratio of a maximum value of the number density to a minimum value thereof (i.e., maximum number density/minimum number density) is preferably larger than 1.2. When the porous ceramic aggregate 14 of the porous ceramic structure 10 is transferred onto the object 22, it is thereby possible to cause the plurality of porous ceramic particles 16 to easily follow the surface of the object 22 with high accuracy, and to be arranged.

In the porous ceramic structure 10, preferably, the plurality of porous ceramic particles 16 have respective planar shapes of different sizes. The ratio of a maximum value of the size of the planar shape to a minimum value thereof (i.e., maximum area/minimum area) is preferably larger than 1.2. Similarly in this case, when the porous ceramic aggregate 14 of the porous ceramic structure 10 is transferred onto the object 22, it is thereby possible to cause the plurality of porous ceramic particles 16 to easily follow the surface of the object 22 with high accuracy, and to be arranged.

Specifically, for example, in a portion of the porous ceramic aggregate 14 which is to be transferred onto an area where the surface of the object 22 is flat, the number density is reduced and the planar shape of the porous ceramic particle 16 is increased, and in another portion of the porous ceramic aggregate 14 which is to be transferred onto an area where the surface of the object 22 is curved, the number density is increased and the planar shape of the porous ceramic particle 16 is made smaller, and it is thereby possible to cause the plurality of porous ceramic particles 16 to follow the surface of the object 22, and to be arranged.

The above-described number density can be obtained, for example, by observing any field of view of a plurality of portions in the porous ceramic aggregate 14 adhered on the sheet 12 with the optical microscope or the like and dividing the number of porous ceramic particles 16 included in each field of view by the area of field of view. Further, the size of the above-described planar shape is obtained for each of the above plurality of fields of view. Specifically, for example, a plurality of straight lines are arbitrarily drawn in each of the above-described fields of view and an average value of lengths of line segments in the porous ceramic particles 16 crossing the straight lines is obtained as the size of the planar shape of the porous ceramic particle 16 in each field of view.

In the porous ceramic structure 10, the tensile elongation (JIS K7127) of the sheet 12 is preferably not lower than 0.5 %. Even when the surface of the object 22 is curved, it is thereby possible to cause the plurality of porous ceramic particles 16 on the sheet 12 to easily follow the surface of the object 22 with high accuracy, and to be arranged. Further, the thickness of the sheet 12 is preferably larger than 0 mm and not larger than 5 mm Even when the surface of the object 22 is curved, it is thereby possible to cause the plurality of porous ceramic particles 16 on the sheet 12 to easily follow the surface of the object 22 with high accuracy, and to be arranged.

The above-described porous ceramic structure 10 and porous ceramic particle 16 allow various variations.

In the porous ceramic particle 16, for example, the dense layer 62 may cover only one main surface 611 among the pair of main surfaces 611 of the porous portion 61. In this case, the main surface 611 covered with the dense layer 62 may be the main surface 611 opposed to the sheet 12, or may be the other main surface 611.

The sheet 12 is not limited to the resin sheet or the resin film having an adhesive force, but may have any one of various structures. The sheet 12, for example, may be formed by applying the adhesive agent or the like onto a base material (i.e., a supporting member). When the surface of the object 22 is curved, the base material of the sheet 12 is preferably cloth, a rubber sheet, foam, or the like. Thus, by using the base material which is relatively soft and has elasticity, it is thereby possible to cause the plurality of porous ceramic particles 16 on the sheet 12 to easily follow the surface of the object 22 with high accuracy, and to be arranged. Further, when the surface of the object 22 is flat, the base material of the sheet 12 is preferably a film, a metal foil, paper, or the like. Thus, by using a relatively hard base material, it is possible to prevent or suppress positional difference of the porous ceramic particles 16 due to occurrence of wrinkle in the sheet 12 when the plurality of porous ceramic particles 16 are transferred onto the surface of the object 22.

Further, In the above-described preferred embodiment, the supporting member supporting the porous ceramic aggregate 14 is a sheet-like one, but the supporting member is not limited to the sheet-like one. The supporting member may be, for example, a three-dimensional shape material. When the surface of the object 22 is curved, for example, a curve-shaped supporting surface in accord with the curved surface is provided in the shape material, and the porous ceramic aggregate 14 is supported on the supporting surface. The supporting surface of the above-described shape material may be a plane surface, a curved surface, a spherical surface, or the like, or may have a further complicated shape. As materials for the shape material, various materials such as a resin, rubber, wood, a metal, ceramic, glass, and the like may be adopted.

The method of manufacturing the porous ceramic particle 16 and the method of manufacturing the porous ceramic structure 10 are not limited to the above-described methods but may be changed in various manners.

The configurations in the above-discussed preferred embodiment and variations may be combined as appropriate only if those do not conflict with one another.

While the invention has been shown and described in detail, the foregoing description is in all aspects illustrative and not restrictive. It is therefore understood that numerous modifications and variations can be devised without departing from the scope of the invention.

### Reference Signs List

- 10: Porous ceramic structure
- 12: Sheet
- 14: Porous ceramic aggregate
- 16: Porous ceramic particle
- 22: Object
- 28: Normal (of sheet)
- 61: Porous portion
- 62: Dense layer
- 161: Main surface (of porous ceramic particle)
- 162: Side surface (of porous ceramic particle)
- 611: Main surface (of porous portion)
- 612: Side surface (of porous portion)
- 621: Surface (of dense layer)

## Claims

1. A porous ceramic particle comprising:
a plate-like porous portion having a pair of main surfaces in parallel with each other; and
a dense layer having porosity lower than that of said porous portion and covering at least one main surface among said pair of main surfaces of said porous portion,
wherein a portion of a surface of said porous portion, which is other than said pair of main surfaces, is exposed from said dense layer.

2. The porous ceramic particle according to claim 1, wherein
said dense layer covers both said pair of main surfaces of said porous portion.

3. The porous ceramic particle according to claim 1 or 2, wherein
the thickness of said dense layer is not larger than 1 % of that of said porous portion.

4. The porous ceramic particle according to any one of claims 1 to 3, wherein
the thickness of said dense layer is not smaller than 0.1 times an average particle diameter of a skeleton particle of said porous portion and not larger than ten times thereof.

5. The porous ceramic particle according to any one of claims 1 to 4, wherein
the thickness of said dense layer is not smaller than 0.05 times an average pore diameter of said porous portion and not larger than five times thereof.

6. The porous ceramic particle according to any one of claims 1 to 5, wherein
the thickness of said dense layer is not smaller than 10 nm and not larger than 1000 nm.

7. The porous ceramic particle according to any one of claims 1 to 6, wherein
the arithmetic average roughness of a surface of said dense layer is not smaller than 50 nm and not larger than 800 nm.

8. The porous ceramic particle according to any one of claims 1 to 7, wherein
when a dense layer material which is a material forming said dense layer extends into the inside of said porous portion from said dense layer, the thickness of said dense layer material existing on the side of said porous portion from an interface between said dense layer and said porous portion is not larger than 10 % of the thickness of said dense layer.

9. A porous ceramic structure comprising:
a sheet; and
a porous ceramic aggregate adhered on said sheet,
wherein said porous ceramic aggregate includes a plurality of porous ceramic particles each of which has the same structure as that of a porous ceramic particle according to any one of claims 1 to 8, and
each porous ceramic particle among said plurality of porous ceramic particles is arranged adjacent to one of the other porous ceramic particles while respective side surfaces of said porous portions exposed from said dense layers are opposed to each other and one main surface of said each porous ceramic particle is adhered on said sheet.

10. The porous ceramic structure according to claim 9, wherein
said porous ceramic aggregate is a member placed on an object, and
a planar shape of said porous ceramic aggregate viewed from an upper surface is the same as that of an area of said object where said porous ceramic aggregate is to be placed, which is viewed from an upper surface.

11. The porous ceramic structure according to claim 9 or 10, wherein
there is at least one porous ceramic particle having a planar shape viewed from an upper surface, which is a polygonal shape surrounded by a plurality of straight lines, among said plurality of porous ceramic particles included in said porous ceramic aggregate.

12. The porous ceramic structure according to any one of claims 9 to 11, wherein
a ratio of a porous ceramic particle having a planar shape viewed from an upper surface, which includes a curve, to said plurality of porous ceramic particles included in said porous ceramic aggregate is not higher than 50 %.

13. The porous ceramic structure according to any one of claims 9 to 12, wherein
said porous ceramic aggregate has a portion in which five or more porous ceramic particles are each arranged with one vertex opposed to one another.

14. The porous ceramic structure according to any one of claims 9 to 13, wherein
a clearance between adjacent porous ceramic particles in said porous ceramic aggregate is not smaller than 0.1 µm and not larger than 10 µm.

15. The porous ceramic structure according to any one of claims 9 to 14, wherein
when respective side surfaces of adjacent porous ceramic particles are opposed to each other in parallel in said porous ceramic aggregate, a tilt angle of one side surface of said adjacent porous ceramic particles includes a portion having 45 degrees or smaller to a normal of said sheet.

16. The porous ceramic structure according to any one of claims 9 to 15, wherein
there are different number densities of porous ceramic particles in said porous ceramic aggregate and a ratio of a maximum value of said number density to a minimum value thereof is larger than 1.2.

17. The porous ceramic structure according to any one of claims 9 to 16, wherein
said plurality of porous ceramic particles have respective planar shapes of different sizes and a ratio of a maximum value of the size of said planar shape to a minimum value thereof is larger than 1.2.
